# EUROPEAN PATENT SPECIFICATION

(11) **EP 0 617 351 B1**
(45) Date of publication and mention of the grant of the patent: **29.12.1997**
(21) Application number: 94103469.6
(22) Date of filing: 08.03.1994
(51) Int. Cl.: G05D 23/19, G08C 23/00

(54) **Processing of control information for HVAC system**
Verarbeitung von Kontrollinformation einer Anlage zur Heizung, Lüftung und Klimatisierung
Traitement d'information de commande pour un système de chauffage, ventilation et airconditionné

(30) Priority: 15.03.1993 US 31415
(43) Date of publication of application: 28.09.1994
(73) Proprietor: TEMIC TELEFUNKEN microelectronic GmbH, 74072 Heilbronn (DE); CARRIER CORPORATION, Syracuse New York 13221 (US)
(72) Inventor: Dolan, Robert P., Syracuse, New York 13204 (US); Zirngibl, Michael J-., D-93333 Neustadt/Donau (DE); Dewolf, Thomas L., Liverpool, New York 13090 (US); Schön, Josef J., D-85072 Landershofen (DE); Philips, Thomas R., Cicero, New York 13039 (US)
(74) Representative: Maute, Hans-Jürgen, Dipl.-Ing.

(56) References cited:
- WO-A-84/00624
- GB-A- 2 099 607
- GB-A- 2 147 477
- US-A- 4 393 662
- US-A- 4 602 343
- US-A- 4 969 508
- US-A- 5 103 391

## Description

This invention relates to a system for controlling the heating or cooling of an interior space according to the precharacterising features of claim 1.

The document GB-A-2 099 607 discloses such a heating apparatus control system, wherein the operation of a gas fire is controlled by digitally encoded signals as control information received from two different sources, a handheld device as a infrared remote control transmitter and a hardwired remote control transmitter. The coded infrared signals are received by an infrared sensor and preamplifier unit which amplifies the signals and filters out unwanted ,,noise". Signals indicative of a desired operational function of the heating system may also be generated by actuation the hardwired remote control transmitter which generates signals of the same code as that of the infrared remote control transmitter and has an identical layout. Coded signals, whether generated by the infrared remote control transmitter or the hardwired remote control transmitter are then passed via a mixer to a receiver, which decodes the received signals and generates at the appropriate output location an analogue or digital signal, suitable for initiating the required control response in accordance with the selected command.

Further it has been known such a system which has included receiving information from an infrared remote control as well as from a hardwired remote control wherein it is required separate decoding of the signals from each remote control and a storing of the decoded information in a particular microprocessor. The stored information could be accessed later by a different microprocessor dedicated to the control of the heating and air conditioning system. In order for this to occur, it was necessary for the two microprocessors to engage in "hand shake" dialogue before the transmission of information could occur. This process required the control microprocessor to periodically interrupt its main control activity and engage in the time consuming separate dialogue with the processor having the most recent control parameters. This process was in turn dependent on the control parameter processor itself having separately obtained information from either of the remote controls transmitting their own separate signals to this processor.

The object of the invention is to provide an HVAC control system with the capability of processing information from at least two different remote sources directly to the main control processor in a timely and efficient manner.

The object is achieved according to the present invention by the characterising features of claim 1. After this the control information from one of the remote control devices is received and encoded to match the control information from the other device. A main control microprocessor is programmed to read the control information from either device as soon as it is transmitted from the receiving system. The main control checks to see if the information is from a valid control source as well as whether the information has been communicated correctly. If the information checks out properly, it is stored for immediate use by the main control microprocessor which will be able to immediately react to any change in control information.

Other objects and advantages of the present invention will be apparent from the following description in conjunction with the accompanying drawings in which:
Figure 1 illustrates a heating or air conditioning system having the capability of receiving signals from hand held remote control devices;
Figure 2 illustrates a system for receiving and processing signals from the hand held remote control devices of Figure 1;
Figure 3 illustrates certain software residing in a wired remote microprocessor within the system of Figure 2 which processes the signal from one of the hand held remote control devices of Figure 1;
Figure 4 illustrates the data format achieved by the software of Figure 3;
Figure 5 illustrates the manner in which data is transmitted by the software of Figure 3;
Figures 6A and 6B illustrate certain software residing in the main control microprocessor of the system in Figure 2 which processes the formatted data; and
Figure 7 illustrates certain power supply switching software residing in the main control microprocessor of the system in Figure 2 which effectively controls the active time of the wired remote microprocessor of Figure 2.

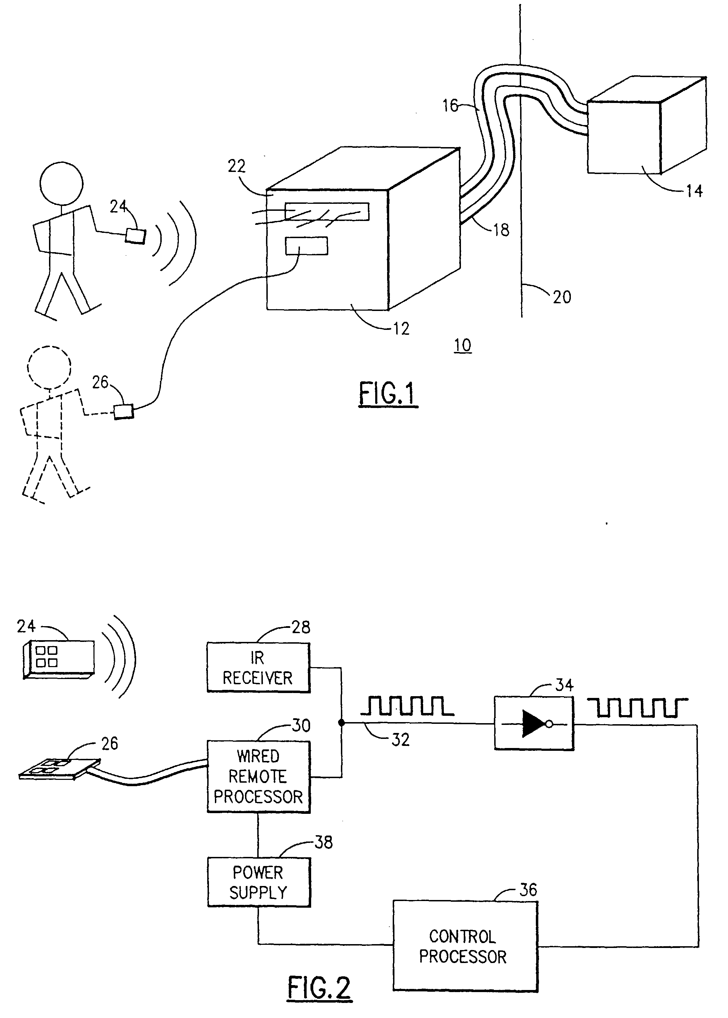

Referring to Figure 1, a split duct free heating or air conditioning system 10 is seen to include an indoor unit 12 and an outdoor unit 14 connected by refrigerant lines 16 and 18 that pass through a building wall 20. This split system is commonly found in areas where interior building space is at a premium allowing only for a small indoor unit. The indoor unit normally includes a blower unit which blows the heated or cooled air out of an opening 22. The controls for the system are also preferably housed within the indoor unit. The controls may include the ability to select certain control parameters such as operating mode (auto mode, cooling mode, dry mode, heating mode), "fan speed selection", "on/off selection". These control parameters may be selectively chosen and activated by either of two hand held remote control devices according to the present invention. In this regard, a person might use an infrared remote control device 24 or a hard wired remote control device 26. It is understood that either device would be used by a person at any one point in time to communicate with the system 10.

Referring to Figure 2, the system for receiving and processing the signals from the infra-red remote control 24 or the hard wired remote control 26 is illustrated. In particular the system is seen to include an infra red receiver 28 which processes the signal from the infra red remote control 24. The remote control 24 and receiver 28 are preferably products offered by Telefunken GmbH as product numbers 354420 and 354423 respectively. It is however to be appreciated that any combination of a known transmitter and a known receiver that can be programmed to provide a number of different control parameter selections can be used as long as the signal thereby produced can be matched by a microprocessor 30 associated with the hard wired remote device 26. In this regard, the microprocessor 30 receives a plurality of individual inputs corresponding to selections that may be made on the hard wired remote device 26. These selections preferably include the same control parameters that may be selected by the infrared remote control device 24. As will be explained in detail hereinafter, the microprocessor 30 reads the parameter selections and generates a bit stream signal over a line 32 corresponding to the signal that would have been generated by the infrared receiver 28 in response to the same series of control parameter selections having been made on that device. The bit stream signal is inverted by an inverter 34 so as to define a logic level signal appropriate for a main control microprocessor 36. The main control microprocessor 36 receives the logic level signal at its interrupt input thereby causing the microprocessor to be interrupted from its main program control. The main control microprocessor proceeds to process the logic level signal and determine the binary value of each bit in the bit stream. The binary values of each bit are stored as bytes of information which are checked for validity and accuracy as will be explained in detail hereinafter. Following this successful processing, the communicated information will be used to immediately update the control parameter information used by the main control program residing within the main control microprocessor 36. As part of the main program control, the microprocessor 36 will also periodically switch a power supply 38 on and off thereby activating and deactivating the microprocessor 30. The periodic activation of the microprocessor 30 causes the execution of an encoding program which will now be described.

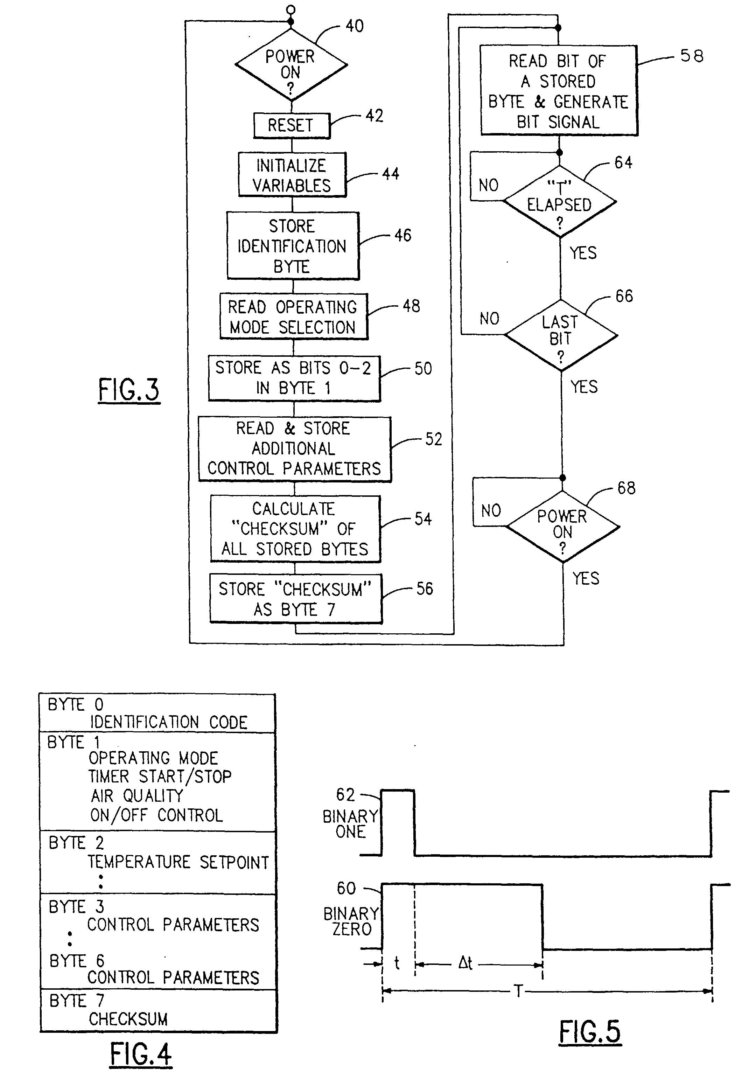

Referring to Figure 3, the encoding program resident in the microprocessor 30 is illustrated in detail. The program begins with a step 40 wherein a "power on" activation is awaited from the power supply 38. At such time as "power on" occurs, the microprocessor proceeds to perform a "power on" reset in a step 42. This requires the microprocessor 30 to begin at a certain initial address each time that the power is turned on. The program at this address begins with a step 44 wherein all program variables are initialized. This would include initializing a number of data fields that will be used to store bytes of information to be defined by the program. Referring to Figure 4, a description of some of the bytes of information is shown. In this regard, eight separate byte fields of information are to be defined. The first is an identification byte "0" and the last is to be a check sum byte equal to the binary value of the bits constituting bytes O - 6. Byte 1 includes the information bits associated with the control parameters relating to "operating mode", "timer start/stop", "air quality" and "on/off" control that have been transmitted from the hard wired remote control 26. It is to be appreciated that the data bytes in Figure 4 can be defined to include any amount of information transmitted that may be necessary to control the heating or air conditioning system 10. Referring again to Figure 3, the microprocessor 30 proceeds to store an identification byte in the first byte position. The identification byte is the same byte of information that is first communicated by the infrared remote control device 24 to the receiver 28. The microprocessor 30 proceeds to a step 48 and reads the operating mode selection from the hard wire remote control 26. It will be remembered that the operating mode may be any of a number of different possibilities including automatic mode, cooling mode, dry mode, heating mode, and fan. Which ever mode is selected, it is included and stored as bits zero through two in byte one. This is accomplished in step 50. In successive fashion, the microprocessor reads and stores other control parameter information so as to define the bytes of information in Figure 4. This is symbolically denoted as step 52. The microprocessor will proceed in a step 54 to calculate the binary value of all defined bytes of information. This value is stored as byte seven in a step 56. The microprocessor will now proceed in a step 58 to successively read each bit of stored bytes zero - seven and generate bit signals depending on whether the read bit is either a binary zero or a binary one.

Referring to Figure 5, the bit signal generation routines for a binary one and a binary zero are illustrated. The bit signal generation for both binary values begins with a transition such as 60 or 62 from zero volts to five volts which lasts for a predefined period of time denoted as "t". This predefined period of time "t" should be selected such that the leading edges 60 or 62 are sufficiently defined for a microprocessor to clearly detect and react thereto. In the event that a binary one is to be transmitted, the generated signal subsequently drops logically low to zero volts. In the event that a binary zero is to be transmitted, the generated signal maintains the logically high voltage level of plus five volts for an additional Δt period. The Δt period should allow the signal level to be sampled five times as will be discussed hereinafter. The signal thereafter drops to zero volts. The signal generating routines moreover assure that another bit signal generation will not occur until a time "T" has elapsed since the beginning of the signal transition denoted by either leading edge 60 or 62. This is step 64 in Figure 3. The bit generation routine will continue to successively read bits from the stored bytes and generate a binary one or a binary zero signal during every time "T" until the last bit of the checksum byte has been sent as detected in step 66. At this time, the microprocessor 30 will proceed to a step 68 and inquire as to whether the power remains on from the power supply 38. It will be remembered that the power supply 38 is switched off so as to define the time between successive bit streams of information. This will be discussed more fully hereinafter. When the power supply has been turned off, the microprocessor 30 proceeds to step 40 and again inquires as to whether the power has been turned on again. At such time as the power has been turned on, the microprocessor 30 will proceed to execute a "power on" reset and again prepare to read and store the information and thereafter generate another bit stream.

It will be remembered that the transmitted bit stream from the microprocessor 30 is inverted and applied to the main control microprocessor 36. The program within the main control processor 36 which processes this bit information will now be described.

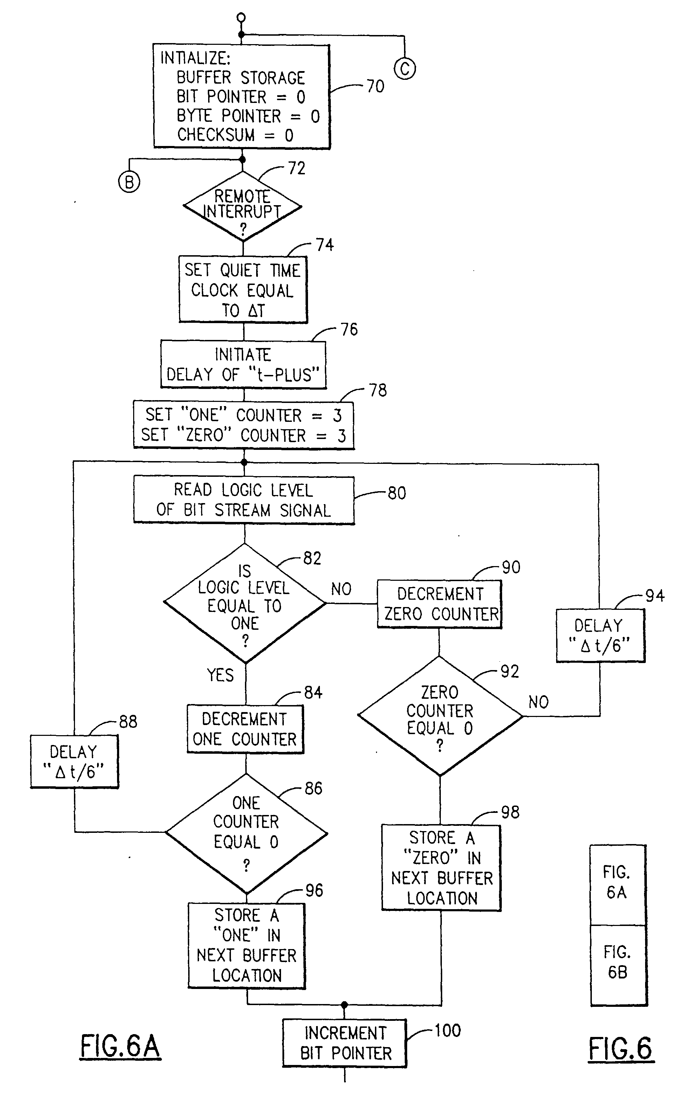

Referring to Figure 6A, the program which receives and processes the inverted bit stream signal begins with a step 70 wherein the program variables to be used are initialized. This includes clearing a buffer storage area and setting a bit pointer and a byte pointer and a "checksum" equal to zero. The program proceeds to a step 72 and awaits a remote interrupt in the bit stream signal being applied to the main control microprocessor 36. It will be remembered that each bit in a bit stream signal is marked by a transition in the signal level that defines a leading edge in the bit signal. It is this logic level change in each bit signal which will be sensed as a remote interrupt in the step 72. When this occurs, the microprocessor 36 immediately proceeds to reset a "quiet time" clock in step 74. The quiet time clock defines a period of time, ΔT, between successive bit streams and is constantly reset in step 74 so as to ultimately define the amount of time between the last bit to be transmitted in a given bit stream and the next bit stream to be generated thereafter. The microprocessor proceeds from step 74 to initiate a delay slightly greater than "t" in step 76 before setting a binary one counter and a binary zero counter equal to three in step 78. The microprocessor will proceed after the delay of step 74 to read the logic level of the bit stream signal being applied to the main control microprocessor 36. Referring to Figure 5, it is to be noted that after an initial "t" period, the logic level of the signal will indicate either a binary one or a binary zero. It is this portion of the bit signal that is to be sampled in step 80. The The microprocessor will proceed to a step 82 and inquire as to whether the sensed logic level of step 80 is equal to a binary one. It will be remembered that the logic level for a binary one signal condition at the input of the microprocessor is a plus five volts due to the inversion of the encoded binary one signal of Figure 5. In the event that the logic level indicates a binary one, the microprocessor 36 proceeds to a step 84 and decrements the one counter and thereafter proceeds to inquire as to whether the one counter equals zero in step 86. In the event that the one counter has not been decremented to zero, the microprocessor proceeds to implement a delay of "Δt/6" in a step 88 and again reads the logic level of the bit stream signal applied to the microprocessor in step 80. The logic level should again be equal to a one thereby causing the counter to again be decremented in a step 84.

Referring to step 80, in the event that a logic level is not equal to binary one, the microprocessor proceeds to a step 90 and decrements the zero counter. The microprocessor will proceed in a step 92 to inquire as to whether the zero counter is equal to zero. In the event that it is not, the microprocessor will proceed to delay for a period of "Δt/6" in a step 94 before again reading the logic level of the bit stream signal in step 80. The sensing of the logic level of the bit stream signal and thereafter determining whether it is a binary one or a binary zero will continue to occur until either the one counter or the zero counter has been decremented to zero. When this occurs, the microprocessor will exit from either step 86 or step 92 to respective steps 96 and 98. The thus determined binary value will be stored in the next open buffer location that has been provided for in the buffer storage in either step 96 or 98. The microprocessor will proceed to a step 100 and increment the bit pointer. The bit pointer will next be examined in a step 102 for being equal to seven. In the event that it is not, the microprocessor will return to step 72 and look for the next interrupt indicating that the next bit signal is to be processed. Referring again to steps 100 and 102, it is to be appreciated that when the bit pointer has been successively incremented to a value of seven, a complete byte of information will have been read and stored within the buffer storage. At this point in time the microprocessor will proceed to a step 104 and inquire as to whether the byte pointer equals zero. It will be remembered that the first byte of transmitted data is always the identification byte. In the event that the first byte has just been read into buffer storage, the microprocessor will exit from step 104 to a step 106 and compare the thus stored buffer byte to a previously stored identification byte value. This comparison is made to assure that the communication being received is from an authorized remote control device. In the event that this is not the case, the microprocessor will exit from step 108 and proceed to return to step 70 and initialize all program variables before again awaiting an interrupt.

Assuming the communicated data is from an appropriate remote control source, the identification byte will be valid as noted in step 108 thereby causing the microprocessor to proceed to a step 112. Referring to step 112, it is seen that this step is encountered either from step 104 or step 108. It is encountered from step 104 anytime a byte has been successfully read into the buffer storage that is not an identification byte and it will be encountered from step 108 when an identification byte has been processed successfully. In either case, the microprocessor will proceed to inquire as to whether the byte pointer equals seven. It will be remembered that the number seven indicates that the last of the eight bytes has been communicated. In the event that the last byte has not been read the microprocessor will proceed to a step 114 and increment the byte pointer before resetting the bit pointer equal to zero in step 116 and returning to step 72. Referring to step 72, it is to be noted that the process will again begin of reading bits until eight successive bits have been read and so noted as a byte of information. This will prompt the microprocessor to again increment the byte pointer and inquire as to whether the last byte has been read in step 112.

When the byte pointer equals seven, all bytes will have been read into the control microprocessor 36. At this point, the microprocessor 36 will proceed to a step 118 and sum the values of buffer bytes zero - six. The thus calculated sum is compared with the "checksum" byte which is the last byte of information received. This is accomplished in step 120. It is to be appreciated that a "checksum" comparison in step 120 will assure that the bytes of information were communicated accurately. In the event that this "checksum" calculation does not indicate an accurate communication, the microprocessor will proceed to exit from the step 120 to the beginning of the program and initialize variables in step 70. The microprocessor will otherwise proceed to a step 122 wherein the bytes of information stored in the buffer will be used to update the control parameters in the control program. In this manner, the control program will be able to respond to any changes in the control parameters that have been recently communicated from either remote control device 24 or 26. Following the updating of the control parameters, the microprocessor will exit step 122 and return to the step 70 wherein the program variables are again initialized before awaiting the next remote interrupt in a step 72 indicating another bit stream of information is to be processed.

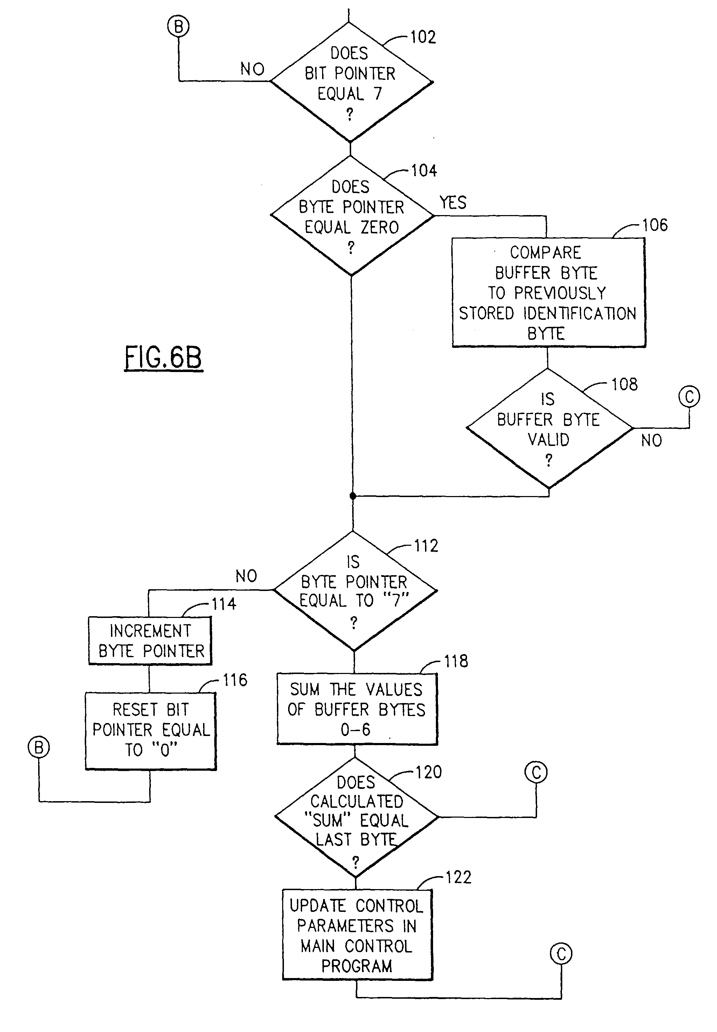

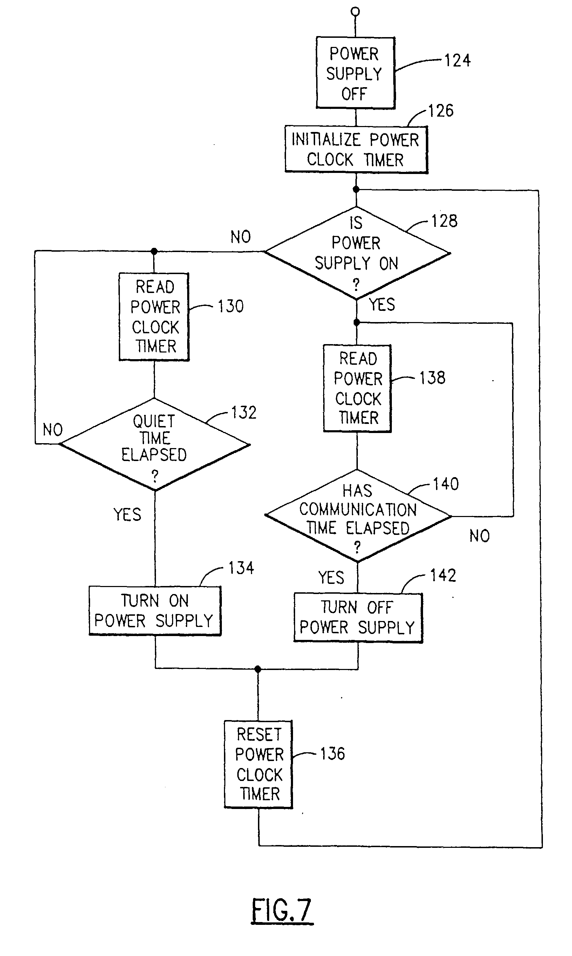

Referring now to Figure 7, the software program resident within the main control microprocessor 36 which turns the power supply 38 on and off is illustrated. This program begins with a step 124 which initially assures that the power supply 38 is in an off condition. The program proceeds to a step 126 and sets a power clock timer equal to zero. The power clock timer begins counting at this point in time. The microprocessor proceeds to a step 128 and inquires as to whether the power supply is on. Since the power supply will initially not be turned on, the microprocessor proceeds to a step 130 and reads the power clock timer. The thus read power clock timer is compared with the quiet time between bit stream transmissions. It will be remembered that this quiet time is set equal to ΔT in step 74. The microprocessor essentially loops around steps 130 and 132 until such time as the quiet time has elapsed. At this point the microprocessor proceeds to a step 134 and turns on the power supply. The power clock timer is immediately reset in a step 136 and the microprocessor proceeds back to step 128 to inquire as to whether the power supply is on. Since the power supply has been turned on, the microprocessor will proceed to a step 138 and read the power clock timer. The thus read time will be compared with the allowed time for the complete communication of a set of data bytes in a step 140. It is to be appreciated that this time is determined by the particular microprocessor configuration used and the time required to read the set of particular bytes that is to be transmitted. The microprocessor will loop back through steps 128 and 140 until the communication time has elapsed. At this point, the microprocessor will proceed to a step 142 and turn off the power supply. This will deactivate the microprocessor 30. The main control microprocessor 36 will return to step 124 and again inquire as to whether the power supply is on. Since the power supply has now been turned off, the microprocessor will proceed to steps 130 and 132 and again await the elapse of quiet time which occurs between successive transmissions of the data bytes. In this manner, the power switching software of Figure 7 effectively dictates a time during which the microprocessor can transmit data bytes and when it cannot. As has been heretofore explained, when the power supply is turned on, the power reset occurs within the microprocessor 30 thus allowing it to execute the software of Figure 3. In this manner, the microprocessor 30 effectively generates the data bytes based on the control parameter selections that have been made by the person holding the hard wired remote control device 26. The envelope of data bytes that is thus generated compares with a similar envelope of bytes that might be generated from the infrared receiver 28 in response to having received transmissions from the infrared remote control device 24. In this manner both the infrared receiver 28 and the microprocessor 30 generate the same bit stream of information on the line 32 which is inverted and subsequently applied to the main control processor 36.

It is to be appreciated that a particular embodiment of the invention has been described. Alterations, modifications and improvements thereto will readily occur to those skilled in the art. Such alterations, modifications and improvements are intended to be within the scope of the invention. Accordingly the forgoing description is by way of example only. The invention is limited only as defined in the following claims.

## Claims

1. A system for controlling the heating or cooling of an interior space comprising:
a) a first and second remote control transmitter (24, 26) for transmitting control information;
b) a receiver (28) for receiving the transmitted control information from the first remote control transmitter (24);
c) a main control processing device (36) for receiving the control information in the data format corresponding to the data format of the first remote control transmitter (24) for controlling the heating and cooling, the main control processing device (36) responsive to process the transmitted control information so as to update the controlled heating or cooling of the interior space, characterised in that
d) the second remote control transmitter (26) transmitting control information in a different data format as the first remote control transmitter (24); and
e) a signal processing device (30) is used for receiving the transmitted control information from the second remote control transmitter (26) and for encoding the received control information in a data format corresponding to the data format of control information transmitted by the first remote control transmitter (24).

2. A system according to claim 1, characterised in that the main control processing device (36) receives the commonly formatted data at an interrupt input prompting said processing device (36) to immediately read the commonly formatted data.

3. A system according to claim 1 or 2, characterised in that the main control processing device (36) for processing the control information comprises:
- means for receiving a bit stream of control information;
- means for sampling each bit in the bit stream more than once to determine the binary value of the bit;
- means for storing the binary value of each bit.

4. A system according to one of the preceding claims, characterised in that means for storing the value of each bit comprises:
- means for storing a predetermined number of bits as a byte of information; and
- means for comparing the first byte of information with a previously stored byte of information to determine whether the bit stream of information is a valid communication.

5. A system according to one of the preceding claims, characterised in that means for storing the value of each bit further comprises:
- means for summing the value of each byte of information received except for the last byte of information; and
- means for comparing the summed value of each byte with the value of the last byte of received information so as to determine whether the control information was accurately processed by said main control processing device (36).

6. A system according to one of the preceding claims, characterised by:
- means, responsive to the comparison of the summed value of each byte with the value of the last byte of received information, for updating the control information utilised by the main control program within said main control processing device (36).

## Patentansprüche

1. System zur Steuerung von Heizung oder Kühlung eines Innenraumes, das umfaßt:
a) eine erste und eine zweite Fernbedienung (24, 26) zur Übermittlung von Steuerungsinformationen;
b) einen Empfänger (28) zum Empfang der von der ersten Fernbedienung (24) übermittelten Steuerungsinformationen;
c) einen Hauptsteuerungsprozessor (36) zum Empfang der Steuerungsinformationen in einem Datenformat gemäß der ersten Fernbedienung (24) zum Steuern von Heizung und Kühlung, wobei der Hauptsteuerungsprozessor (36) so reagiert, daß er die übertragenen Steuerungsinformationen verarbeitet, um die gesteuerte Heizung oder Kühlung des Innenraumes zu aktualisieren,
dadurch gekennzeichnet, daß
d) die zweite Fernbedienung (26) Steuerungsinformationen in einem anderen Datenformat übermittelt als die erste Fernbedienung (24); und
e) ein Signalprozessor (30) zum Empfang der von der zweiten Fernbedienung (26) übermittelten Steuerungsinformationen und zum Kodieren der empfangenen Steuerungsinformationen in einem Datenformat, das dem Datenformat der von der ersten Fernbedienung (24) übermitttelten Steuerungsinformationen entspricht, verwendet wird.

2. System nach Anspruch 1, dadurch gekennzeichnet, daß der Hauptsteuerungsprozessor (36) die üblich formatierten Daten an einem Unterbrechungseingang empfängt, der den Prozessor (36) dazu veranlaßt, die üblich formatierten Daten sofort zu lesen.

3. System nach Anspruch 1 oder 2 , dadurch gekennzeichnet, daß der Hauptsteuerungsprozessor (36) zum Verarbeiten der Steuerungsinformationen umfaßt:
- Hilfsmittel zum Empfang eines Bitstroms von Steuerungsinformationen;
- Hilfsmittel zum mehr als einmaligen Überprüfen jedes Bits im Bitstrom zum Feststellen des binären Werts des Bits;
- Hilfsmittel zum Speichern des binären Werts jedes Bits.

4. System nach einem der vorstehenden Ansprüche, dadurch gekennzeichnet, daß die Hilfsmittel zum Speichern des Werts jedes Bits umfassen:
- Hilfsmittel zum Speichern einer festgelegten Anzahl von Bits als Datenbyte; und
- Hilfsmittel zum Vergleichen des ersten Datenbytes mit einem zuvor gespeicherten Datenbyte, um festzustellen, ob der Datenbitstrom eine gültige Übertragung darstellt.

5. System nach einem der vorstehenden Ansprüche, dadurch gekennzeichnet, daß die Hilfsmittel zum Speichern des Wertes jedes Bits ferner umfassen:
- Hilfsmittel zum Zusammenzählen der einzelnen Werte aller empfangenen Datenbytes, ausgenommen des letzte Datenbyte; und
- Hilfsmittel zum Vergleichen der zusammengezählten Einzelwerte aller Bytes mit dem Wert des letzten Bytes der empfangenen Informationen um festzustellen, ob die Steuerungsinformationen vom genannten Hauptsteuerungsprozessor (36) richtig verarbeitet wurden.

6. System nach einem der vorstehenden Ansprüche, dadurch gekennzeichnet, daß es enthält:
- Hilfsmittel, die auf den Vergleich der zusammengezählten Einzelwerte aller Bytes mit dem Wert des letzten Bytes der empfangenen Informationen reagieren, um die vom Hauptsteuerungsprogramm im erwähnten Hauptsteuerungsprozessor (36) verwendeten Steuerungsinformationen zu aktualisieren.

## Revendications

1. Un système pour commander le chauffage ou le refroidissement d'un espace intérieur, comprenant :
a) un premier et un second émetteur de télécommande (24, 26) pour émettre une information de commande;
b) un récepteur (28) pour recevoir l'information de commande émise qui provient du premier émetteur de télécommande (24);
c) un dispositif de traitement de commande principal (36) destiné à recevoir l'information de commande dans le format de données correspondant au format de données du premier émetteur de télécommande (24), pour commander le chauffage et le refroidissement, le dispositif de traitement de commande principal (36) réagissant en traitant l'information de commande émise, de façon à actualiser le chauffage ou le refroidissement commandé de l'espace intérieur, caractérisé en ce que
d) le second émetteur de télécommande (26) émet de l'information de commande dans un format de données différent de celui du premier émetteur de télécommande (24); et
e) un dispositif de traitement de signal (30) est utilisé pour recevoir l'information de commande émise provenant du second émetteur de télécommande (26), et pour coder l'information de commande reçue en un format de données qui correspond au format de données de l'information de commande qui est émise par le premier émetteur de télécommande.

2. Un système selon la revendication 1, caractérisé en ce que le dispositif de traitement de commande principal (36) reçoit les données en format commun sur une entrée d'interruption qui demande à ce dispositif de traitement (36) de lire immédiatement les données en format commun.

3. Un système selon la revendication 1 ou 2, caractérisé en ce que le dispositif de traitement de commande principal (36) pour le traitement de l'information de commande comprend :
- des moyens pour recevoir un train de bits d'information de commande;
- des moyens pour échantillonner plus d'une fois chaque bit dans le train de bits, pour déterminer la valeur binaire du bit;
- des moyens pour enregistrer la valeur binaire de chaque bit.

4. Un système selon l'une des revendications précédentes, caractérisé en ce que les moyens pour enregistrer la valeur de chaque bit comprennent :
- des moyens pour enregistrer un nombre prédéterminé de bits sous la forme d'un multiplet d'information; et
- des moyens pour comparer le premier multiplet d'information avec un multiplet d'information enregistré précédemment, pour déterminer si le train de bits d'information est une communication valide.

5. Un système selon l'une des revendications précédentes, caractérisé en ce que les moyens pour enregistrer la valeur de chaque bit comprennent en outre :
- des moyens pour faire la somme de la valeur de chaque multiplet d'information qui est reçu, à l'exception du dernier multiplet d'information; et
- des moyens pour comparer la valeur sommée de chaque multiplet avec la valeur du dernier multiplet d'information reçue, de façon à déterminer si l'information de commande a été traitée de manière exacte par le dispositif de traitement de commande principal (36).

6. Un système selon l'une des revendications précédentes, caractérisé par :
- des moyens, réagissant à la comparaison de la valeur sommée de chaque multiplet avec la valeur du dernier multiplet d'information reçue, de façon à actualiser l'information de commande qui est utilisée par le programme de commande principal dans le dispositif de traitement de commande principal (36).
